# EUROPÄISCHE PATENTANMELDUNG

(11) **EP 3 646 735 A1**
(43) Veröffentlichungstag der Anmeldung: **06.05.2020**
(21) Anmeldenummer: 18203611.1
(22) Anmeldetag: 31.10.2018
(51) Int. Cl.: A23L 5/10, A47J 27/04, A47J 27/16, B65D 85/804

(54) **KARTUSCHE FÜR EINE MODULARE KOCHKONSOLE UND VERFAHREN ZUM ZUBEREITEN VON EINEM NAHRUNGSMITTEL IN EINER KARTUSCHE**

(71) Anmelder: padcom ag, 9500 Will SG (CH)
(72) Erfinder: LAIMBACHER, Guido, 9606 Bütschwil (CH)
(74) Vertreter: Patentbüro Paul Rosenich AG

(57) **Zusammenfassung**

Die Erfindung betrifft eine Kartusche 15 für eine modulare Kochkonsole 200 zum Zubereiten von Nahrungsmitteln in einem Nahrungsmittelbehälter 10. Die Kartusche umfasst einen Kartuschengrundkörper 20 mit einem Kartuschenbodenabschnitt 25 und mit einer Behälteraufnahme 30 zum Aufnehmen des Nahrungsmittelbehälters 10, ein erstes Temperierelement 35 sowie einen Anschlussabschnitt 40 zum Anschliessen der Kartusche 15 an die modulare Kochkonsole 200. Die Kartusche 15 weist einen Dampferzeugungsabschnitt 27 zum Erzeugen von Kochdampf auf. Weiters betrifft die Erfindung eine modulare Kochkonsole 200 für zumindest eine Kartusche, wobei die modulare Kochkonsole 200 einen Flüssigkeitsbehälter 270 zum Versorgen der zumindest einen Kartusche 15 mit Flüssigkeit 26 und zumindest eine Kartuschenaufnahme 280 zum Anordnen der zumindest einen Kartusche 15 an der modularen Kochkonsole 200 aufweist. Die Erfindung betrifft weiters ein Verfahren zum Zubereiten von Nahrungsmitteln in zumindest einer Kartusche 15 mit der modularen Kochkonsole 200.

## Beschreibung

Die Erfindung betrifft eine Kartusche für eine modulare Kochkonsole, eine modulare Kochkonsole sowie einen Nahrungsmittelbehälter für die Kartusche und ein Verfahren zum Zubereiten von einem Nahrungsmittel in einer Kartusche.

Berufstätige Menschen stehen täglich vor dem Problem in den Arbeitspausen eine abwechslungsreiche und gesunde Nahrung zu sich zu nehmen. Aus Zeitgründen greifen immer mehr Menschen zu Fastfood-Nahrungsmitteln oder lassen sich verzehrfertige Nahrungsmittel per Lieferservices zukommen. Kleine und mittlere Unternehmen, welche über keine firmeneigene Kantine verfügen, stellen zum Teil deren Mitarbeitern eine Kochvorrichtung, typischerweise eine Kochnische mit einzelnen Heizplatten, zur Verfügung. Damit können die Mitarbeiter deren vorgekochtes Nahrungsmittelmenü aufwärmen oder gegebenenfalls deren mitgebrachte Nahrungsmittel kochen.

Aus dem Stand der Technik sind unterschiedliche Kochvorrichtungen bekannt, in welchen ungekochte oder halbgekochte Nahrungsmittel zubereitet werden oder fertig gegart werden können. Die Nahrungsmittel werden entweder vor dem Kochen direkt in ein Kochbehältnis gefüllt oder befinden sich bereits vor dem Kochen in einem Kochbehältnis und werden mit oder in der Kochvorrichtung zubereitet.

Die WO 2014/019018 A1 offenbart eine Sous-vide Kochvorrichtung, in der vorportionierte und vakuumverpackte Nahrungsmittel zubereitet werden. Diese Kochvorrichtung weist eine Basis und ein Kochgefäss auf, wobei das Kochgefäss an der Basis lösbar angeordnet ist und das Kochgefäss mit einem Deckel verschlossen wird. Das Kochgefäss ist mit Wasser gefüllt und weist eine Heizvorrichtung zum Heizen des Wassers sowie eine Temperaturmessvorrichtung zum Messen der Wassertemperatur auf. Im Kochgefäss ist ein bewegliches Liftgestell angeordnet, welches das Nahrungsmittel in das Wasser befördert und nach dem Kochen aus dem Wasser entnimmt. Die Basis weist eine Steuerungseinrichtung auf, welche mit der Heizvorrichtung und der Temperaturmessvorrichtung verbunden ist. Die EP 2 475 290 B1 zeigt ebenfalls eine Sous-vide Kochvorrichtung.

Die WO 2017/083664 A2 offenbart eine Kochvorrichtung mit mehreren Containern. Die Kochvorrichtung umfasst ein Fluidreservoir und eine Fluidzirkulationseinrichtung mit Zirkulationspumpen, welche das Fluid von dem Fluidreservoir in die einzelnen Container pumpen. Als Fluid wird entweder Dampf oder Wasser verwendet. Die Konsole weist eine zentrale Steuerungseinrichtung zum Regeln der Temperatur von Heizelementen auf. Die Container weisen Bodenöffnungen auf, mit denen die Container mit dem Fluid aus dem Fluidreservoir versorgt werden. Die in den Container positionierten Nahrungsmitteln werden mit diesem Fluid gekocht.

Die WO 2017/062287 A2 zeigt einen Steamer mit einer ersten Kochkonsole und mit mehreren Schubladen zum Einlegen des Nahrungsmittels. Die Schubladen werden in eine Kochkammer der Kochkonsole geschoben. Die Kocheinrichtung umfasst eine hintere Kammer, in der ein Dampfgenerator angeordnet ist, der die Kochkammer mit Kochdampf versorgt. Die erste Kocheinrichtung kann mit einer weiteren Kocheinrichtung verbunden werden, wobei diese vertikal oder horizontal aneinander angeordnet werden.

Nachteilig an diesen bekannten Lösungen ist, dass die Nahrungsmittel in dem Kochraum jeweils mit der einen, voreingestellten Fluidtemperatur zubereitet werden. Damit müssen die Nahrungsmittel mit unterschiedlichen Kochzeiten zu unterschiedlichen Zeiten aus dem Kochraum entnommen werden. Dafür muss der Kochraum geöffnet werden, wodurch ein Temperaturverlust im Kochraum entsteht.

Es ist die Aufgabe der vorliegenden Erfindung, einen oder mehrere Nachteile des Standes der Technik zu beheben. Insbesondere soll eine Kartusche zum Zubereiten von Nahrungsmitteln in einem Nahrungsmittelbehälter geschaffen werden, mit welcher das Zubereiten der Nahrungsmittel verbessert wird. Insbesondere soll eine modulare Kochkonsole geschaffen werden, welche den Umgang mit mehreren Kartuschen für einen Benutzer vereinfacht oder ein Verfahren zum Zubereiten von Nahrungsmitteln in zumindest einer Kartusche geschaffen werden, welche das Zubereiten der Nahrungsmittel für den Benutzer vereinfacht.

Diese Aufgabe wird durch die in den unabhängigen Ansprüchen definierten Vorrichtungen und Verfahren gelöst. Vorteilhafte Weiterbildungen sind in den Figuren, der Beschreibung und insbesondere in den abhängigen Patentansprüchen dargelegt.

Eine erfindungsgemässe Kartusche für eine modulare Kochkonsole zum Zubereiten von einem Nahrungsmittel in einem Nahrungsmittelbehälter, umfasst einen Kartuschengrundkörper mit einem Kartuschenbodenabschnitt und mit einer Behälteraufnahme zum Aufnehmen des Nahrungsmittelbehälters, ein erstes Temperierelement sowie einen Anschlussabschnitt zum Anschliessen der Kartusche an die modulare Kochkonsole. Die Kartusche weist einen Dampferzeugungsabschnitt zum Erzeugen von Kochdampf auf.

Mit der erfindungsgemässen Kartusche ist es möglich einen Nahrungsmittelbehälter aufzunehmen, der mit unterschiedlichen Nahrungsmitteln gefüllt ist. Durch die Anordnung des Dampferzeugungsabschnitts in der Kartusche kann der Kochdampf mithilfe des ersten Temperierelements direkt in der Kartusche erzeugt werden, was ein direktes Einwirken des Kochdampfs auf den Nahrungsmittelbehälter und somit auch auf die zu garenden Nahrungsmitteln ermöglicht.

Bevorzugt weist der Dampferzeugungsabschnitt eine vordefinierte Flüssigkeitsmenge auf, welche mithilfe des ersten Temperierelements erhitzt wird, sodass eine vordefinierte Kochdampfmenge entsteht, welche somit für jede einzelne Kartusche individuell einstellbar ist. Damit lassen sich je nach zu garendem Nahrungsmittel im Nahrungsmittelbehälter unterschiedliche Kochprozessparameter einstellen. Beispielsweise kann der Kochdampf mit der gewünschten Temperatur und der gewünschten Kochdampfmenge über einen langen Zeitraum, beispielsweise über mehr als 3 Stunden, erzeugt werden, sodass das Nahrungsmittel im Nahrungsmittelbehälter einfach zubereitet werden kann, ohne dass der Benutzer während des Kochbetriebs den Zustand des Nahrungsmittels überprüfen muss.

Beispielsweise ist mit dieser Kartusche ein Sous-vide Kochbetrieb ein bzw. ein Sous-vide Dampfkochverfahren mit einer definierten Temperatur des Kochdampfs von exakt 64 °C möglich, wodurch die Aromen des Nahrungsmittels schonend freigesetzt werden können. Dabei wird die Qualität des Nahrungsmittels nicht beeinträchtigt, wodurch sich der Benutzer bzw. der Konsument gesund ernähren kann. Im Gegensatz dazu liegt die Temperatur der Flüssigkeit beim Sous Vide Flüssigkeitskochverfahren bei nur 62 °C. Typischerweise wird als Flüssigkeit Wasser verwendet, wobei der Kochdampf Wasserdampf ist. Alternativ sind auch andere Flüssigkeiten bzw. Dämpfe zum Zubereiten des Nahrungsmittels in der Kartusche verwendbar. Dabei sind aromatisierte Flüssigkeiten oder mit Additiven, wie Ölen, angereicherte Flüssigkeiten, wie Wasser, verwendbar.

Ein wie hier vorliegend beschriebenes Temperierelement ist geeignet, die Wärme zum Erzeugen des Kochdampfs zu leiten oder die Wärme des Kochdampfs zu erzeugen. Dabei kann das erste Temperierelement beispielsweise als Widerstandsheizung oder als Tauchsiedeeinrichtung ausgebildet sein. Weiters kann das erste Temperierelement als eine Mikrowellen-Heizeinrichtung, als eine Infrarot-Heizeinrichtung oder als eine Halogenstrahler-Heizeinrichtung ausgebildet sein.

Eine wie hier vorliegend beschriebene Kartusche ist ein Behälter, welcher eine Behälteraufnahme aufweist, in welcher ein Nahrungsmittelbehälter positionierbar ist und der dicht verschlossen werden kann. Vorteilhaft ist die Kartusche gegenüber ihrer äusseren Umgebung wärmeisoliert. Die Kartusche kann lösbar an eine modulare Kochkonsole anordnet werden. Dazu weist die Kartusche vorteilhaft einen Anschlussabschnitt auf, mit der die Kartusche an der modularen Kochkonsole elektrisch und mechanisch gekoppelt wird.

Ein wie hier vorliegend beschriebener Nahrungsmittelbehälter ist ein Behälter, der zur Aufnahme von Nahrungsmitteln geeignet ist. Der Nahrungsmittelbehälter ist geeignet, in eine wie hier vorliegend beschriebene Kartusche eingebracht zu werden und in dieser aufgewärmt zu werden. Für diesen Gebrauch werden Nahrungsmittel in den Nahrungsmittelbehälter gefüllt. Dies kann durch den Benutzer selbst vorgenommen werden, typischerweise werden die Nahrungsmittelbeälter aber individuell gefüllt und als Konsumgüter zur Verfügung gestellt. Eine wie hier vorliegend beschriebene modulare Kochkonsole ist eine Kochvorrichtung mit einem modularen Aufbau, welche mehrere wie hier vorliegend beschriebene Kartuschen aufnehmen kann. Dazu weist die Kochkonsole vorteilhaft einen Aufnahmeabschnitt auf, der die Kartusche an der modularen Kochkonsole elektrisch und mechanisch koppelt. Modular bedeutet hier vorliegend beschrieben, dass einerseits eine Kochkonsole mit einer weiteren oder mehrerer weiteren Kochkonsolen verbunden werden kann und andererseits, dass die Kochkonsole mehrere Kartuschen aufnehmen kann, welche direkt nebeneinander oder direkt übereinander an der modularen Kochkonsole angeordnet werden.

Bevorzugt ist der Dampferzeugungsabschnitt von der Behälteraufnahme beabstandet. Dadurch wird der Kochdampf nicht in der unmittelbaren Nähe der Behälteraufnahme erzeugt, wodurch während des Dampfkochverfahrens nur Kochdampf in die Behälteraufnahme eindringt. Dadurch bleibt die Behälteraufnahme weitgehend flüssigkeitsfrei, sodass die Temperatur des Kochdampfs in der Behälteraufnahme besser kontrollierbar ist.

Bevorzugterweise ist der Dampferzeugungsabschnitt im Kartuschenbodenabschnitt angeordnet, wodurch der dort erzeugte Kochdampf in die Behälteraufnahme aufsteigen kann und somit die Flüssigkeit einfach vom Kochdampf getrennt wird.

Insbesondere ist der Kartuschenbodenabschnitt lösbar am Kartuschengrundkörper angeordnet, wodurch sich der Kartuschengrundkörper vom Kartuschenbodenabschnitt separieren lässt und sich dieser einfach reinigen lässt. Beispielsweise kann der Kartuschengrundkörper in einen Geschirrspüler gegeben werden und darin gereinigt werden.

Alternativ oder ergänzend weist die Kartusche eine Siebeinlage auf, welche den Dampferzeugungsabschnitt von der Behälteraufnahme trennt. Damit wird zusätzlich zu dem zuvor genannten Vorteil verhindert, dass der Nahrungsmittelbehälter in den Dampferzeugungsabschnitt getaucht werden kann und mit der dort vorhandenen Flüssigkeit in Berührung kommt.

Vorzugsweise weist die Behälteraufnahme eine Halteeinheit zum Halten des Nahrungsmittelbehälters auf. Die Halteeinheit ermöglicht ein gezieltes Platzieren und Halten des Nahrungsmittelbehälters in der Behälteraufnahme. Somit kann verhindert werden, dass der Nahrungsmittelbehälter während des Dampfkochverfahrens am Kartuschengrundkörper anliegt, womit eine gewünschte natürliche Zirkulation des Kochdampfs um den Nahrungsmittelbehälter unterbrochen wäre.

Bevorzugt ist die Halteeinheit an der Siebeinlage angeordnet. Dadurch kann der Nahrungsmittelbehälter direkt beim Einführen in die Behälteraufnahme sicher gehalten und positioniert werden, ohne dass der Nahrungsmittelbehälter in die Flüssigkeit in dem Dampferzeugungsabschnitt eintaucht.

Insbesondere weist die Halteeinheit in der Behälteraufnahme eine Halteöffnung auf. Die Halteöffnung kann als Kerbe ausgebildet sein, welche entlang der Längsausstreckung der Siebeinlage ausgebildet ist. Dies ermöglicht ein verbessertes Halten des Nahrungsmittelbehälters und ein reproduzierbares Anordnen des Nahrungsmittelbehälters in der Behälteraufnahme. Der Benutzer wird angehalten, den Nahrungsmittelbehälter immer gleich in der Behälteraufnahme anzuordnen, wodurch die Qualität des zubereiteten Nahrungsmittels stets unverändert bleibt.

Bevorzugterweise weist der Kartuschenbodenabschnitt eine Aussparung zum Anordnen der Kartusche an der modularen Kochkonsole auf. Die Aussparung ermöglicht eine verbesserte Fixierung und Positionierung der Kartusche an der modularen Kochkonsole. Damit ist der Benutzer der Kartusche bzw. der modularen Kochkonsole gezwungen, die Kartusche ordnungsgemäss an der modularen Kochkonsole zu positionieren, wodurch das Dampfkochverfahren störungsfrei ausgeführt werden kann.

Alternativ oder ergänzend weist der Kartuschengrundkörper eine Aussparung zum Anordnen der Kartusche an der modularen Kochkonsole auf, wodurch das zuvor beschriebene ordnungsgemässe Positionieren weiter verbessert wird, da die Kartusche mit einem weiteren Bereich an die modulare Kochkonsole angeordnet wird.

Vorzugsweise weist die Kartusche einen Anschluss für eine Flüssigkeitsversorgung auf, wobei der Anschluss mit dem Dampferzeugungsabschnitt zum Auffüllen des Dampferzeugungsabschnitts mit einer vordefinierten Flüssigkeitsmenge verbunden ist. Damit kann die Kartusche von extern mit Flüssigkeit versorgt werden, wodurch eine unterbrechungsfreie Zubereitung von Nahrungsmitteln in mehreren Zubereitungszyklen garantiert wird.

Vorteilhaft weist die Kartusche einen Flüssigkeitstank auf, der mit dem Dampferzeugungsabschnitt zum Flüssigkeitsaustausch verbunden ist. Im Flüssigkeitstank der Kartusche kann eine grössere Menge Flüssigkeit eingefüllt werden, welche dosiert an den Dampferzeugungsabschnitt abgegeben werden kann. Damit lässt sich die Flüssigkeitsmenge im Dampferzeugungsabschnitt einfach einstellen und gegebenenfalls während des Dampfkochverfahrens nachfüllen.

Bevorzugterweise besteht der Kartuschengrundkörper im Wesentlichen aus einem wärmeisolierenden Material und abschnittsweise aus einem wärmeleitenden Material. Durch das wärmeisolierende Material kann verhindert werden, dass vor, während aber auch nach dem Kochbetrieb dem Benutzer zugängliche Bauteile oder Komponenten übermässig erhitzt werden. Dies ermöglicht es dem Benutzer, die Kartusche nach dem Kochbetrieb anzugreifen, ohne besondere Massnahmen treffen zu müssen und/oder verhindert, dass sich ein Benutzer im laufenden Kochbetrieb an der Kartusche verbrennen kann. Zudem verhindert das wärmeisolierende Material Wärmeverluste der Kartusche, was das Dampfkochverfahren unterstützt.

Durch die abschnittsweise Ausführung der Kartusche aus wärmeleitendem Material wird eine Versorgung der Kartusche mit Wärme ermöglicht, sodass in der Kartusche der benötigte Kochdampf erzeugt werden kann.

Insbesondere ist das wärmeleitende Material an dem Kartuschenbodenabschnitt angeordnet, sodass die Wärme direkt in den Dampferzeugungsabschnitt geleitet bzw. im Dampferzeugungsabschnitt erzeugt werden kann.

Bevorzugt ist das erste Temperierelement im Kartuschenbodenabschnitt angeordnet, wodurch die Wärme unmittelbar im Dampferzeugungsabschnitt erzeugt wird. Damit ist eine energieeffiziente Erzeugung des Kochdampfs in dem Dampferzeugungsabschnitt gewährleistet.

Vorteilhaft umfasst das erste Temperierelement ein magnetisches Material, welches die Wärme mithilfe eines externen Magnetfelds im Kartuschenbodenabschnitt erzeugt. Dabei induziert das externe Magnetfeld Wirbelströme im magnetischen Material, sodass sich das magnetische Material erwärmt und die erzeugte Wärme an die Flüssigkeit im Dampferzeugungsabschnitt abgibt. Die Temperatur der Aussenseite des Kartuschenbodenabschnitts bleibt im Wesentlichen auf Raumtemperatur.

Insbesondere ist das erste Temperierelement benachbart zu der Aussparung zum Anordnen der Kartusche an der modularen Kochkonsole angeordnet. Die Kartusche wird mithilfe der Aussparung stabil in der modularen Kochkonsole gehalten, sodass in diesem Bereich somit auch ein effizientes Erwärmen der Flüssigkeit im Dampferzeugungsabschnitt erfolgt.

Insbesondere weist der Kartuschenbodenabschnitt ein weiteres Temperierelement auf, wodurch das Erwärmen der Flüssigkeit im Dampferzeugungsabschnitt verbessert wird.

Insbesondere ist das erste Temperierelement an einer ersten Seite benachbart zur Aussparung angeordnet und das weitere Temperierelement an einer zweiten Seite benachbart zur Aussparung angeordnet, wodurch die Flüssigkeit im Dampferzeugungsabschnitt schneller erhitzt werden kann und somit das Erzeugen des Kochdampfs besser kontrolliert wird.

Vorzugsweise weist die Kartusche einen Kartuschendeckel auf, wodurch die Kartusche dicht verschlossen werden kann. Eine dicht verschliessbare Kartusche ist per Definition so zu verstehen, dass die Kartusche während des Dampfkochverfahrens bis zu einem Kochdampfüberdruck von etwa 0.2 bar zum Kochen verwendbar ist, ohne dass eine Leckage auftreten kann. Dafür weist der Kartuschendeckel eine Verriegelungseinrichtung auf. Insbesondere ist der Kartuschendeckel lösbar mit dem Kartuschengrundkörper der Kartusche verbunden. Der Kartuschendeckel kann vollständig von dem Kartuschengrundkörper separiert werden, wodurch der Nahrungsmittelbehälter einfach in die Behälteraufnahme eingeführt werden kann.

Bevorzugt weist der Kartuschendeckel eine weitere Halteeinheit zum Halten des Nahrungsmittelbehälters auf. Die Halteeinheit ermöglicht ein beabstandetes Positionieren des Nahrungsmittelbehälters vom Kartuschengrundkörper. Dies ermöglicht ein freies Zirkulieren des Kochdampfs um den Nahrungsbehälter, wodurch das zu garende Nahrungsmittel reproduzierbar zubereitet werden kann.

Insbesondere ist die weitere Halteeinheit zum Halten des Nahrungsmittelbehälters eine Halteklammer, in welcher der Nahrungsmittelbehälter zumindest abschnittsweise eingeklemmt werden kann. Diese Halteklammer kann dazu dienen, nach der Beendigung des Dampfkochverfahrens und durch das Entfernen des Kartuschendeckels, den Nahrungsmittelbehälter aus der Behälteraufnahme zu nehmen, ohne dass der Benutzer den temperierten Nahrungsmittelbehälter berühren muss. Die Halteklammer kann dem Benutzer beim Öffnen des Nahrungsmittelbehälters unterstützen, sodass der Benutzer den Nahrungsmittelbehälter nicht berühren muss und das Nahrungsmittel aus dem Nahrungsmittelbehälter entnehmen kann.

Bevorzugterweise weist die Kartusche ein Überdruckventil auf, wodurch der Kochdampf bei der Überschreitung eines vordefinierten Kochdampfdrucks die Kartusche verlassen kann.

Bevorzugt weist die Kartusche einen Temperaturfühler auf, welcher die Temperatur des Kochdampfs misst. Der Temperaturfühler ist mit einer Steuerungseinrichtung der modularen Kochkonsole verbunden oder verbindbar, wodurch die Temperaturdaten des Kochdampfs an die modulare Kochkonsole übermittelt werden können.

Insbesondere weist die Kartusche eine Datenerkennungseinrichtung zum Erfassen von Nahrungsmittelbehälterdaten bzw. Kochprozessdaten auf. Die Datenerkennungseinrichtung ist mit einer Steuerungseinrichtung der modularen Kochkonsole verbunden oder verbindbar, sodass die Nahrungsmittelbehälterdaten an die modulare Kochkonsole übermittelt werden können. Nahrungsmittelbehälterdaten umfassen Daten zum Nahrungsmittelbehälter, wie beispielsweise Dimensionen des Nahrungsmittelbehälters oder dessen Material, usw. und Daten zum Kochprozess für das jeweilige Nahrungsmittel im Nahrungsmittelbehälter, wie die durchschnittliche Kochzeit, die maximale Kochtemperatur, die Temperiergeschwindigkeit beim Temperieren der Flüssigkeiten im Dampferzeugungsabschnitt, mehrere Temperaturprofile usw. sowie Daten für den Konsumenten des Nahrungsmittels, wie beispielsweise Chargennummer des Nahrungsmittelbehälters, Allergikerangaben, Energieinhaltsangaben, Herstellungsdatum, Haltbarkeit usw. Anhand den Nahrungsmittelbehälterdaten kann die modulare Kochkonsole erkennen, ob der Nahrungsmittelbehälter in der Kartusche überhaupt aufgeheizt werden darf.

Bevorzugt ist die Datenerkennungseinrichtung geeignet die Nahrungsmittelbehälterdaten mithilfe Radiowellen zu identifizieren, sodass diese automatisch und berührungslos übertragen werden können.

Ein weiterer Aspekt der Erfindung betrifft eine modulare Kochkonsole für zumindest eine Kartusche und umfasst einen Flüssigkeitsbehälter zum Versorgen der zumindest einen Kartusche mit einer Flüssigkeit und zumindest eine Kartuschenaufnahme zum Anordnen der zumindest einen Kartusche an der modularen Kochkonsole, wobei diese Kartuschenaufnahme zumindest einen Vorsprung zum Positionieren der zumindest einen Kartusche aufweist.

Der zumindest eine Vorsprung zum Positionieren der zumindest einen Kartusche an der Kartuschenaufnahme ermöglicht die zumindest eine Kartusche stabil an der modularen Konsole zu halten, wobei der Benutzer der modularen Kochkonsole die Kartusche einfach entnehmen kann, um diese mit einem Nahrungsmittelbehälter zu füllen. Damit wird sichergestellt, dass die zumindest eine Kartusche ordnungsgemäss an der modularen Kochkonsole angeordnet und gehaltern werden kann.

Insbesondere ist der zumindest eine Vorsprung zu zumindest einer Aussparung der zumindest einen Kartusche komplementär ausgebildet. Dies bedeutet, dass der zumindest eine Vorsprung so in die zumindest eine Aussparung der zumindest einen Kartusche passt, dass die zumindest eine Kartusche im Wesentlichen fest jedoch vom Benutzer lösbar mit modularen Kochkonsole verbunden ist. Der zumindest eine Vorsprung der modularen Kochkonsole ist somit ergänzend zur zumindest einen Aussparung der Kartusche ausgebildet.

Vorteilhaft weist die Kartuschenaufnahme mehrere Vorsprünge zum Positionieren der zum Positionieren der zumindest einen Kartusche auf, wodurch mehrere wie hier vorliegend beschriebene Kartuschen benachbart zueinander an der modularen Kochkonsole angeordnet werden können.

Vorteilhaft kann die modulare Kochkonsole mit weiteren Kochkonsolen verbunden werden, wofür die Kochkonsolen Verbindungsabschnitte aufweisen. Damit kann die modulare Kochkonsole wie ein Baukastensystem erweitert werden.

Vorzugsweise weist die modulare Kochkonsole eine weitere Kartuschenaufnahme zum Aufnehmen einer weiteren Kartusche auf. Damit wird die Anzahl der Kartuschen weiter erhöht, wodurch es ermöglicht wird, dass mehrere Benutzer die modulare Kochkonsole zum Zubereiten von Nahrungsmittel nutzen können.

Vorteilhaft weist die weitere Kartuschenaufnahme einen Vorsprung zum Positionieren einer weiteren Kartusche auf. Damit wird auch die weitere Kartusche an der modularen Kochkonsole stabil gehalten.

Bevorzugterweise weist die modulare Kochkonsole zumindest ein Heizelement zum Temperieren der Flüssigkeit in der zumindest einen Kartusche auf. Das zumindest eine Heizelement ist entweder als aktives Heizelement oder als passives Heizelement ausgebildet. Ein aktives Heizelement erzeugt die Wärme direkt im Heizelement, wie beispielsweise eine Widerstandsheizung. Ein passives Heizelement erzeugt die Wärme in einem Temperierelement, welches in der zumindest einen Kartusche angeordnet ist.

Insbesondere ist das zumindest eine Heizelement im Wesentlichen an der zumindest einen Kartuschenaufnahme angeordnet. Da die wie hier beschriebene zumindest eine Kartusche an der Kartuschenaufnahme angekoppelt bzw. angeordnet wird, ist die vom zumindest einen Heizelement erzeugte Wärme effizient auf den Dampferzeugungsabschnitt der zumindest einen Kartusche übertragbar.

Insbesondere ist das zumindest eine Heizelement benachbart zum zumindest einen Vorsprung angeordnet. Damit kann das zumindest eine Heizelement stabil in die zumindest eine Kartuschenaufnahme befestigt werden.

Insbesondere ist zumindest ein weiteres Heizelement benachbart zum zumindest einen Vorsprung angeordnet. Somit ist an beiden Seiten des zumindest einen Vorsprungs zumindest ein Heizelement angeordnet. Damit kann der Kochbetrieb mit der zumindest einen Kartusche effizient durchgeführt werden.

Insbesondere ist das zumindest eine Heizelement eine Induktionsspule. Eine Induktionsspule ist ein passives Heizelement. Die Induktionsspule erzeugt ein magnetisches Feld, welches Wirbelströme in einem magnetischen Material erzeugt, wodurch sich dieses magnetische Material aufheizt. Weiters kann als passives Heizelement ein Infrarotstrahler oder ein Halogenstrahler verwendet werden. Damit wird gewährleistet, dass sich die modulare Kochkonsole selbst nicht erwärmt, wodurch das sichere Bedienen für den Benutzer der modularen Kochkonsole gewährleistet ist.

Vorteilhaft ist das zumindest eine weitere Heizelement eine Induktionsspule, sodass das Aufheizen des magnetischen Materials effizient erfolgt

Vorzugsweise weist die modulare Kochkonsole eine Steuerungseinrichtung auf, welche zumindest mit einer Datenerkennungseinrichtung der zumindest einen Kartusche verbunden oder verbindbar ist. Damit werden die Nahrungsm ittelbehälterdaten von der Datenerkennungseinrichtung der zumindest einen Kartuschen auf die Steuerungseinrichtung der modularen Kochkonsole übertragbar. Vorteilhaft steuert die Steuerungseinrichtung das zumindest eine Heizelement der modularen Kartusche, sodass die Wärme in der Kartusche erzeugt werden kann und somit die gewünschte Kochdampfmenge mit der gewünschten Temperatur des Kochdampfs erzeugt werden kann.

Alternativ oder ergänzend ist die Steuerungseinrichtung mit zumindest einem Temperaturfühler der zumindest einen Kartusche verbunden oder verbindbar. Damit lassen sich neben den zuvor genannten Nahrungsmittelbehälterdaten auch die Temperaturdaten des Kochdampfs an die Steuerungseinrichtung übertragen.

Die Verbindung der Steuerungseinrichtung mit der Datenerkennungseinrichtung und/oder mit dem Temperaturfühler kann als elektrische Verbindung mittels einer Kabelverbindung und/oder als eine drahtlose Verbindung mittels, Bluetooth®, oder RFID oder dergleichen ausgeführt sein.

Bevorzugt weist die Steuerungseinrichtung eine Speichereinheit auf, in welcher die Nahrungsmittelbehälterdaten und die Temperaturdaten gespeichert werden können. Diese sind somit in der modularen Kochkonsole hinterlegt und können zu einem späteren Zeitpunkt wieder abgerufen werden.

Vorteilhaft weist die Steuerungseinrichtung eine Recheneinheit auf, welche mit der Speichereinheit verbunden ist. Die Recheneinheit ist dabei ausgebildet, die unterschiedliche Nahrungsmittelbehälterdaten und/oder Temperaturdaten miteinander zu vergleichen. Die Recheneinheit ist weiter ausgebildet, entsprechende Solldaten von der Speichereinheit abzurufen und mit den unterschiedlichen Nahrungsmittelbehälterdaten und/oder Temperaturdaten zu vergleichen. Damit kann beispielsweise ein neues Heizprofil erstellt werden, oder ein bestehendes Heizprofil verbessert werden.

Vorteilhaft weist die Steuerungseinrichtung eine Netzwerkschnittstelle auf, mit der die Nahrungsmittelbehälterdaten und/oder Temperaturdaten an das Internet übermittelt werden können. Mit den Nahrungsmittelbehälterdaten und/oder Temperaturdaten kann beispielsweise eine Web-Plattform versorgt werden, mit der sich Benutzer von hier beschriebenen modularen Kochkonsolen untereinander austauschen können.

Bevorzugt weist die modulare Kochkonsole einen Flüssigkeitstank auf, welcher mit dem Flüssigkeitsbehälter verbunden ist und lösbar an der modularen Kochkonsole angeordnet ist. Der Flüssigkeitstank ermöglich es dem Benutzer die modulare Kochkonsole mit einer grösseren Flüssigkeitsmenge zu versorgen, ohne dass ein Anschluss für eine fest installierte Flüssigkeitsversorgung notwendig ist.

Vorteilhaft weist die modulare Kochkonsole eine Akkumulatoreinrichtung auf. Damit kann die modulare Kochkonsole an jedem beliebigen Ort mit Energie versorgt und betrieben werden.

Vorzugsweise weist die modulare Kochkonsole zumindest eine Grillkartuschenaufnahme auf, wobei sich die Grillkartuschenaufnahme von der Kartuschenaufnahme unterscheidet. Damit kann an der modularen Kochkonsole zusätzlich eine Grillkartusche angeordnet und betrieben werden.

Die Grillkartuschenaufnahme weist Verbindungselemente auf, welche die Grillkartusche von der hier vorliegend beschriebenen Kartusche beabstandet. Beispielsweise sind diese Verbindungselemente als Sockelelemente ausgebildet, welche lösbar mit der Grillkartusche verbunden werden können. Damit ist gewährleistet, dass keine Wärme von der Grillkartusche auf die wie hier vorliegend beschriebene Kartusche übertragen wird.

Vorteilhaft weist die Grillkartuschenaufnahme eine Steckeröffnung auf, mit der die Grillkartusche mit der modularen Kochkonsole elektrisch verbindbar ist.

Eine Grillkartusche ist geeignet ein Nahrungsmittel aufzunehmen und in der Grillkartusche mit einem Grillverfahren zuzubereiten. Somit können mithilfe der modularen Kochkonsole unterschiedliche Nahrungsmittel mit unterschiedlichen Kochverfahren zubereitet werden.

Vorteilhaft weist die Grillkartusche einen Grillkartuschengrundkörper mit einer Nahrungsmittelaufnahme zum Aufnehmen eines Nahrungsmittels auf, sowie ein Ölreservoir zum Aufnehmen von Kochöl oder Kochfett auf. Das Ölreservoir weist zumindest eine Öffnung zum dosierten Abgeben von Kochöl oder Kochfett an den Kartuschengrundkörper auf. Damit kann das Kochöl oder das Kochfett während des Grillverfahrens in den Grillkartuschengrundkörper eingeführt werden.

Vorteilhaft weist der Grillkartuschengrundkörper einen Anschlussabschnitt auf, womit die Grillkartusche an eine modulare Kochkonsole angeordnet wird. Der Anschlussabschnitt weist eine Steckverbindung auf, mit der die Grillkartusche elektrisch und mechanisch mit einer modularen Kochkonsole verbunden wird.

Vorteilhaft weist der Grillkartuschengrundkörper zumindest einen Grillrost auf, sodass das Nahrungsmittel einfach gegrillt werden kann und nicht am Grillkartuschengrundkörper festkleben kann.

Vorteilhaft weist der Grillrost zumindest ein erstes Temperierelement zum Erhitzen des Nahrungsmittels auf. Typischerweise wird der Grillrost mithilfe des ersten Temperierelements elektrisch geheizt. Dabei ist das erste Temperierelement mithilfe eines Verbindungskabels mit der Steckverbindung im Grillkartuschengrundkörper verbunden.

Insbesondere weist der Grillkartuschengrundkörper einen Kartuschenbodenabschnitt auf, in dem ein Ölaufnahmeabschnitt zum Aufnehmen des Kochöls oder Kochfetts angeordnet ist. Der Ölaufnahmeabschnitt ist direkt unter dem Grillrost angeordnet, sodass das bereits verwendete Kochöl oder Kochfett vom Grillrost in den Ölaufnahmeabschnitt abgeführt werden kann. Beispielsweise ist der Ölaufnahmeabschnitt eine Ölwanne. Damit kann das bereits benutzte Kochöl oder Kochfett vom Grillrost separiert werden und in der Ölwanne gehalten werden.

Vorteilhaft ist der Ölaufnahmeabschnitt lösbar in dem Grillkartuschengrundkörper angeordnet. Damit kann das bereits benutzte Kochöl oder Kochfett einfach entsorgt werden.

Insbesondere weist die Grillkartusche eine Filtereinrichtung zum Filtern von Grilldunst auf. Beispielsweise ist die Filtereinrichtung eine Dunstabsaugeinrichtung zum Absaugen des Grilldunstes. Damit ist das Auftreten einer Geruchsentwicklung ausserhalb der Grillkartusche verhinderbar.

Vorteilhaft ist die Filtereinrichtung lösbar in der Grillkartusche angeordnet, sodass diese aus der Grillkartusche entnehmbar ist und vom Benutzer entsorgt werden kann.

Der erfindungsgemässe Nahrungsmittelbehälter für eine wie hier vorliegend beschriebene Kartusche weist einen Behälterkörper zum Aufnehmen von Nahrungsmitteln und zumindest einen Befestigungsabschnitt zum Befestigen des Nahrungsmittelbehälters in der Kartusche auf. Damit kann der Nahrungsmittelbehälter an der Halteeinheit der Behälteraufnahme in der Kartusche positioniert werden. Zusätzlich kann der Nahrungsmittelbehälter mithilfe des Befestigungsabschnittes am Kartuschendeckel gehalten werden, sodass der Nahrungsmittelbehälter mit dem Kartuschendeckel nach dem Dampfkochverfahren aus dem Kartuschengrundkörper entfernt werden kann.

Bevorzugt weist der Nahrungsmittelbehälter eine Sicke auf, wodurch sich das Volumen des Nahrungsmittelbehälters während des Dampfkochverfahrens vergrössern kann, ohne dass der Nahrungsmittelbehälter beschädigt wird.

Alternativ oder ergänzend weist der Nahrungsmittelbehälter eine Datenspeichereinheit auf, auf der die hier vorliegend beschriebenen Nahrungsmittelbehälterdaten gespeichert sind und von der diese von der Datenerkennungseinrichtung der Kartusche abgerufen werden können.

Das erfindungsgemässe Verfahren zum Zubereiten von einem Nahrungsmittel in zumindest einer Kartusche mit einer modularen Kochkonsole, welche eine Steuerungseinrichtung aufweist, umfasst zumindest die folgenden Schritte:
- Bereitstellen eines Nahrungsmittelbehälters in der zumindest einen Kartusche;
- Übermitteln von Nahrungsmittelbehälterdaten und/oder Temperaturdaten an die Steuerungseinrichtung der modularen Kochkonsole;
- Temperieren zumindest eines ersten Temperierelements der zumindest einen Kartusche auf Basis des übermittelten Nahrungsmittelbehälterdaten und/oder Temperaturdaten.

Die Wärmeabgabe des ersten Temperierelements in der zumindest einen Kartusche kann, abgestimmt auf das Nahrungsmittel im Nahrungsmittelbehälter, über einen langen Zeitraum, beispielsweise über mehr als 3 Stunden, von der Steuerungseinrichtung laufend und exakt kontrolliert werden.

Insbesondere ist die zumindest eine Kartusche eine wie hier vorliegend beschriebene Kartusche.

Insbesondere ist die modulare Kochkonsole eine wie hier vorliegend beschriebene modulare Kochkonsole.

Vorzugsweise temperiert das erste Temperierelement eine Flüssigkeit in einem Dampferzeugungsabschnitt der zumindest einen Kartusche. Der dadurch erzeugte Kochdampf kann sehr genau eingestellt werden, sodass beispielsweise eine Kochdampftemperatur von 64 °C über einen langen Zeitraum konstant gehalten werden kann.

Bevorzugterweise werden die an die Steuerungseinrichtung übermittelten Nahrungsmittelbehälterdaten und/oder Kochprozessdaten und/oder Temperaturdaten in der Recheneinheit weiterverarbeitet. Die Steuerungseinrichtung erzeugt dabei Steuerbefehle für das zumindest eine Temperierelement, sodass die Temperatur des Kochdampfs geregelt werden kann.

Bevorzugt vergleicht die Recheneinheit die Nahrungsmittelbehälterdaten und/oder Temperaturdaten und/oder Kochprozessdaten mit entsprechenden Solldaten des jeweils zuzubereitenden Nahrungsmittels in dem Nahrungsmittelbehälter. Damit lässt sich das Nahrungsmittel reproduzierbar zubereiten.

Vorteilhaft prüft die Recheneinheit die Nahrungsmittelbehälterdaten und/oder Temperaturdaten und/oder Kochprozessdaten. Bei der Prüfung kann die Recheneinheit beispielsweise erkennen, ob der in der Behälteraufnahme positionierte Nahrungsmittelbehälter für die Zubereitung in der Kartusche geeignet ist.

Vorteilhaft wird ein ungeeigneter Nahrungsmittelbehälter in der Behälteraufnahme der Kartusche von der Steuerungseinrichtung erkannt und anschliessend ein Warnsignal an der Displayeinrichtung der modularen Kochkonsole übermittelt und angezeigt. Somit wird der Benutzer auf den ungeeigneten Nahrungsmittelbehälter aufmerksam gemacht.

Vorteilhaft werden auf Basis des Vergleichs weitere Nahrungsmittelbehälterdaten und/oder Temperaturdaten und/oder Kochprozessdaten erstellt. Damit wird das Zubereiten der Nahrungsmittel wiederkehrend verbessert.

Bevorzugterweise werden die Nahrungsmittelbehälterdaten und/oder Temperaturdaten und/oder Kochprozessdaten auf einer Web-Plattform zur Verfügung gestellt. Damit werden die Nahrungsmittelbehälterdaten und/oder Temperaturdaten für mehrere Benutzer zugänglich.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile.

Es zeigen dabei:
- Fig. 1: eine erste Ausführungsform einer erfindungsgemässen Kartusche in einer Schnittdarstellung,
- Fig. 2: den Kartuschenbodenabschnitt der Kartusche gemäss Fig. 1 in einer Schnittdarstellung,
- Fig. 3: den Kartuschengrundkörper der Kartusche gemäss Fig. 1 in einer Seitendarstellung,
- Fig. 4: den Kartuschengrundkörper der Kartusche gemäss Fig. 5 in einer Frontaldarstellung,
- Fig. 5: den Kartuschendeckel der Kartusche gemäss Fig. 1 in einer Frontaldarstellung,
- Fig. 6: den Kartuschendeckel der Kartusche gemäss Fig. 3 in einer Seitendarstellung,
- Fig. 7: eine erste Ausführungsform einer erfindungsgemässen modularen Kochkonsole in einer perspektivischen Darstellung,
- Fig. 8: die modulare Kochkonsole gemäss Fig. 7 in einer Schnittdarstellung,
- Fig. 9: die modulare Kochkonsole gemäss Fig. 8 in einer Frontaldarstellung,
- Fig. 10: eine weitere Ausführungsform der erfindungsgemässen Kartusche in einer perspektivischen Darstellung,
- Fig. 11: den Kartuschendeckel der Kartusche gemäss Fig. 10 in einer perspektivischen Darstellung,
- Fig. 12: eine weitere Ausführungsform einer erfindungsgemässen modularen Kochkonsole in einer perspektivischen Darstellung,
- Fig. 13: die modulare Kochkonsole gemäss Fig. 12 in einer Schnittdarstellung,
- Fig. 14: die modulare Kochkonsole gemäss Fig. 13 in einer Frontaldarstellung,
- Fig. 15: eine erfindungsgemässen Grillkartusche in einer Seitendarstellung,
- Fig. 16: den Grillkartuschengrundkörper der Grillkartusche gemäss Fig. 15 in einer Aufsichtsdarstellung,
- Fig. 17: den Kartuschendeckel der Grillkartusche gemäss Fig. 15 in einer Aufsichtsdarstellung,
- Fig. 18: eine weitere Ausführungsform einer erfindungsgemässen modularen Kochkonsole in einer perspektivischen Darstellung,
- Fig. 19: ein erfindungsgemässer Nahrungsmittelbehälter in einer Aufsichtsdarstellung, und
- Fig. 20: den Nahrungsmittelbehälter gemäss Fig. 19 in einer Seitendarstellung.

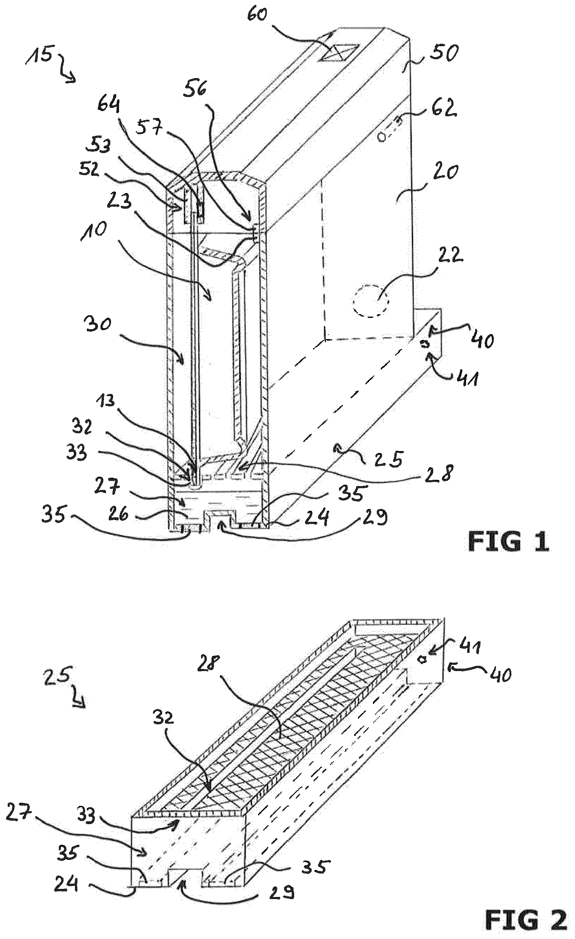

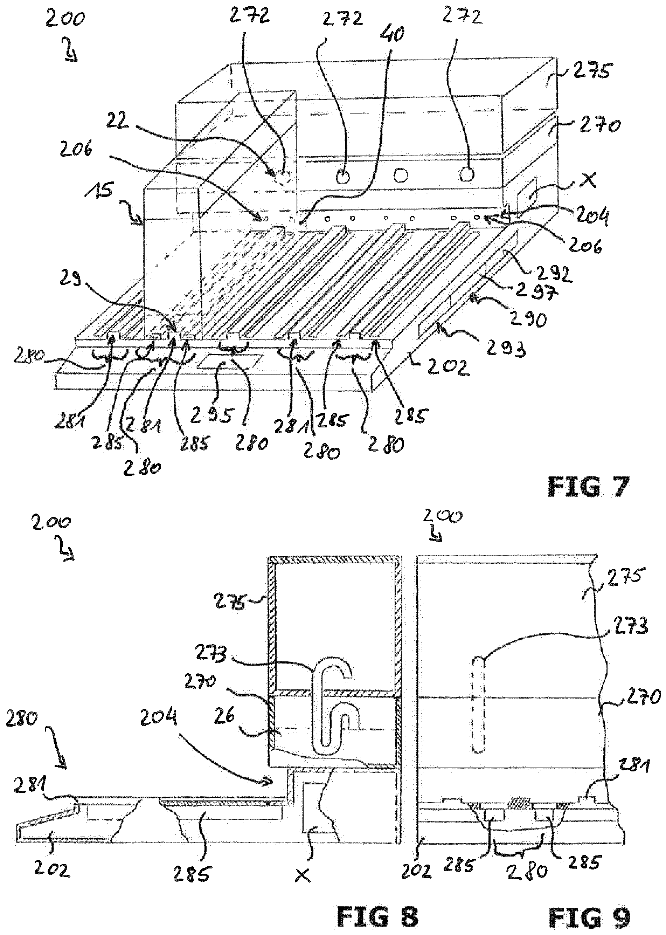

Fig. 1 bis 6 zeigen eine erste Ausführungsform der Kartusche 15 zum Zubereiten von Nahrungsmitteln in einem Nahrungsmittelbehälter 10. Die Kartusche 15 in Fig. 1 ist in einer aufgeschnittenen Ansicht gezeigt und umfasst einen Kartuschengrundkörper 20 mit einem Kartuschenbodenabschnitt 25 sowie einen Kartuschendeckel 50. Der Kartuschengrundkörper 20 und der Kartuschenbodenabschnitt 25 sind einteilig gezeigt. Der Kartuschengrundkörper 20 weist eine Behälteraufnahme 30 zum Aufnehmen des Nahrungsmittelbehälters 10 und einen Anschlussabschnitt 40 zum Anschliessen der Kartusche 15 an eine modulare Kochkonsole auf (siehe bspw. Fig. 7). Der Kartuschengrundkörper 20 und der Kartuschendeckel 50 bestehen im Wesentlichen aus einem wärmeisolierenden Material, wie beispielsweise einen wärmeisolierenden Kunststoff oder wärmeisolierende Polymerspritzgussteile, und abschnittsweise aus einem wärmeleitenden Material, wie beispielsweise eine wärmeleitende Keramik oder ein Metall. Durch das wärmeisolierende Material kann verhindert werden, dass vor, während aber auch nach dem Kochbetrieb dem Benutzer zugängliche Bauteile oder Komponenten übermässig erhitzt werden.

Wie in den Fig. 1 bis Fig. 4 gezeigt, weist die Kartusche 15 im Kartuschenbodenabschnitt 25 einen Dampferzeugungsabschnitt 27 zum Erzeugen von Kochdampf auf. Dafür ist der Dampferzeugungsabschnitt 27 mit Flüssigkeit 26, beispielsweise Wasser, gefüllt und von der Behälteraufnahme 30 beabstandet. Der Kartuschenbodenabschnitt 25 weist im Kartuschenboden 24 ein erstes und ein zweites Temperierelement 35 zum Erhitzen der Flüssigkeit 26 im Dampferzeugungsabschnitt 27 auf. Die Temperierelemente 35 bestehen aus einem wärmeleitenden und magnetischen Material, beispielsweise aus Eisen, Nickel oder Eisen/Nickel-Legierungen, oder legierte Keramik-Lösungen, in welchem die Wärme zum Erhitzen der Flüssigkeit 26 mithilfe eines externen Magnetfelds erzeugt wird. Der dadurch im Dampferzeugungsabschnitt 27 erzeugte Kochdampf steigt in die Behälteraufnahme 30 auf und zirkuliert um den dort angeordneten Nahrungsmittelbehälter 10.

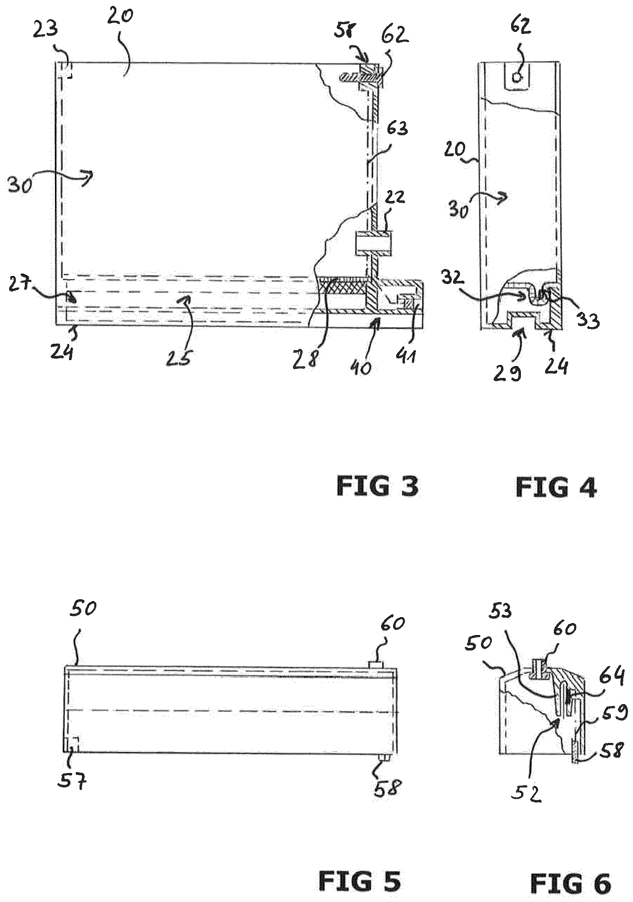

Die Fig. 3 und Fig. 4 sind zu besseren Sichtbarkeit einzelner Komponenten der Kartusche 15 teilweise aufgeschnitten dargestellt. Der Kartuschenbodenabschnitt 25 weist eine Aussparung 29 zum Anordnen der Kartusche 15 an der modularen Kochkonsole auf, wobei die beiden Temperierelemente 35 benachbart zur Aussparung 29 angeordnet sind und in dem Kartuschenboden 24 integriert sind. Zwischen dem Kartuschenbodenabschnitt 25 und dem Kartuschengrundkörper 20 ist eine Siebeinlage 28 angeordnet, welche den Dampferzeugungsabschnitt 27 von der Behälteraufnahme 30 trennt. An der Siebeinlage 28 ist eine Halteöffnung 33 als Halteinheit 32 angeordnet. Diese Halteöffnung 33 ist als Kerbe ausgebildet und verläuft entlang der Längserstreckung der Siebeinlage 28. Dabei ist die die Kerbe asymmetrisch in der Siebeinlage 28 angeordnet, sodass der Benutzer den Nahrungsmittelbehälter 12 einfach in die Behälteraufnahme positionieren kann. In der Behälteraufnahme 30 ist der Nahrungsmittelbehälter 10 so angeordnet, dass ein Befestigungsabschnitt 13 des Nahrungsmittelbehälters 10 in die Halteöffnung 33 eingreift, sodass verhindert werden kann, dass der Nahrungsmittelbehälter 10 am Kartuschengrundkörper 20 anliegt.

Im Bereich des Kartuschenbodenabschnitts 25 ist der Anschlussabschnitt 40 der Kartusche 15 angeordnet. Dabei steht der Anschlussabschnitt 40 gegenüber der Behälteraufnahme 30 vor, sodass die Kartusche 15 im Bereich des Anschlussabschnitts 40 einfach an die modulare Kochkonsole angeordnet werden kann. Der Anschlussabschnitt 40 weist einen Stecköffnung 41 auf, mit der die Kartusche 15 elektrisch und mechanisch mit der modularen Kochkonsole verbunden wird.

Der Kartuschengrundkörper 20 weist einen Anschluss 22 für eine Flüssigkeitsversorgung auf. Der Anschluss 22 ist mit dem Dampferzeugungsabschnitt 27 verbunden, sodass die Flüssigkeit von der Flüssigkeitsversorgung in den Dampferzeugungsabschnitt 27 geleitet wird. Der Anschluss 22 befindet sich benachbart zum Kartuschenbodenabschnitt 25, sodass die Flüssigkeit einfach in den Dampferzeugungsabschnitt 27 befördert werden kann. Am Kartuschengrundkörper 20 ist im Bereich der Behälteraufnahme 30 ein Temperaturfühler 62 zum Messen der Temperatur des Kochdampfs in der Behälteraufnahme 30 angeordnet, welcher mithilfe eines Verbindungskabels 63 elektrisch mit der Stecköffnung 41 am Anschlussabschnitt 40 verbunden ist. Der Temperaturfühler 62 ist benachbart zum Kartuschendeckels 50 angeordnet, sodass die gewünschte Temperatur des Kochdampfs entfernt von dem Dampferzeugungsabschnitt 27 gemessen werden kann.

Die Fig. 5 und Fig. 6 zeigen den Kartuschendeckel 50, welcher die wie zuvor beschriebene Kartusche 15 dicht verschliesst, wobei der Kartuschendeckel 50 vollständig von dem Kartuschengrundkörper 20 der Kartusche 15 lösbar bzw. separierbar ist. Die Fig. 6 ist zur besseren Sichtbarkeit einzelner Komponenten teilweise aufgeschnitten dargestellt. Der Kartusche 15 weist eine Verriegelungseinrichtung 56 mit einem ersten Verriegelungselement 57 und einem zweiten Verriegelungselement 23 auf, welche den Kartuschendeckel 50 am Kartuschengrundkörper 20 verriegeln. Dabei ist das erste Verriegelungselement 51 am Kartuschendeckel 50 angeordnet und das zweite Verriegelungselement 23 am Kartuschengrundkörper 20 angeordnet (siehe Fig. 1). Der Kartuschendeckel 50 weist ein Überdruckventil 60 auf, wodurch die Kartusche 15 bei einem unerwünschten Überdruck geöffnet wird, sodass der Kochdampf aus der Kartusche 15 entweichen kann. An der Innenseite des Kartuschendeckels 50 ist eine weitere Halteeinheit 52 angeordnet, welche eine Halteklammer 53 ist. Die Halteklammer 53 ist asymmetrisch am Kartuschendeckel 50 angeordnet und ist ausgebildet, einen Befestigungsabschnitt 13 des Nahrungsmittelbehälters 10 zu halten.

Der Kartuschendeckel 50 weist eine Datenerkennungseinrichtung 64 auf, die an der Halteklammer 53 angeordnet ist. Die Datenerkennungseinrichtung 64 ist mittels eines Datenübertragungskabels 59 mit einem ersten Steckelement einer Datensteckverbindung 58 verbunden, welches am Kartuschendeckel 50 angeordnet ist. Das zweite Steckelement der Datensteckverbindung 58 ist am Kartuschengrundkörper 20 (siehe Fig. 3) angeordnet und mittels eines Kabels mit der Stecköffnung 41 verbunden. Im zusammengesetzten Zustand ist somit die Datenerkennungseinrichtung 64 des Kartuschendeckels 50 mit der Stecköffnung 41 des Kartuschengrundkörpers 20 elektrisch verbunden. Die Datenerkennungseinrichtung 64 ist geeignet diverse Nahrungsmittelbehälterdaten mithilfe von Radiowellen zu lesen und zu identifizieren. Dafür weist der Nahrungsmittelbehälter 10 einen RFID-Chip im Bereich des Befestigungsabschnitts 13 auf.

Die Fig. 7 bis Fig. 9 zeigen eine erste Ausführungsform der erfindungsgemässen modularen Kochkonsole 200 für eine Kartusche 15 gemäss den Fig. 1 bis Fig 6. Die Fig. 8 und Fig. 9 sind zur besseren Sichtbarkeit einzelner Komponenten der modularen Kochkonsole 200 teilweise aufgeschnitten dargestellt. Die modulare Kochkonsole 200 umfasst eine Konsolenbasis 202 und einen Flüssigkeitsbehälter 270 zum Versorgen der Kartusche 15 mit einer Flüssigkeit 26, wie beispielsweise Wasser. Dafür weist der Flüssigkeitsbehälter 270 mehrere Öffnungen 272 auf, welche jeweils mit dem Anschluss 22 einer Kartusche 15 verbunden werden können. Die Konsolenbasis 202 weist einen Aufnahmeabschnitt 204 auf, an welche der Anschlussabschnitt 40 der Kartusche 15 angeordnet bzw. mechanisch gekoppelt wird. Der Aufnahmeabschnitt 204 weist mehrere Steckverbindungen 206 auf, welche beim Anordnen der Kartusche 15 an die modulare Kochkonsole 200 in die jeweiligen Stecköffnungen 41 der Kartusche 15 eingeführt werden und damit elektrisch verbunden werden.

Die modulare Kochkonsole 200 umfasst mehrere Kartuschenaufnahmen 280 zum Anordnen mehrere hier beschriebenen Kartuschen 15 an der modularen Kochkonsole 200. Diese Kartuschenaufnahmen 280 sind an der Konsolenbasis 202 angeordnet und weisen jeweils einen Vorsprung 281 zum Positionieren der zumindest einen Kartusche 15 auf. Damit wird die jeweilige Kartusche 15 stabil an der modularen Konsole 200 gehalten. Dafür ist der Vorsprung 281 zu der Aussparung 29 der Kartusche 15 komplementär ausgebildet, wodurch der Vorsprung 281 so in die Aussparung 29 der Kartusche 15 passt, dass die zumindest eine Kartusche 15 fest jedoch vom Benutzer lösbar mit der modularen Kochkonsole 200 verbindbar ist.

Die modulare Kochkonsole 200 weist mehrere Heizelemente 285 zum Temperieren der Flüssigkeit 26 in der Kartusche 15 auf, welche jeweils benachbart zum jeweiligen Vorsprung 281 angeordnet sind. Somit sind die Heizelemente 285 an den beiden Seiten des jeweiligen Vorsprungs 281 angeordnet. Als Heizelement 285 ist eine Induktionsspule vorgesehen, welche die Wärme in den Temperierelementen 35 am Kartuschenboden 24 der Kartusche 15 erzeugt. Dafür bestehen die Temperierelemente 35 zumindest abschnittsweise aus einem magnetischen Material. Das von der Induktionsspule erzeugte magnetische Feld induziert Wirbelströme in diesem magnetischen Material, wodurch sich das magnetische Material aufheizt.

Die modulare Kochkonsole 200 weist eine Steuerungseinrichtung 290 auf, welche mit den Steckverbindungen 206 elektrisch verbunden ist und welche somit mit dem Temperaturfühler 62 mit der Datenerkennungseinrichtung 64 der Kartusche 15 verbindbar ist. Damit können Temperaturdaten und Nahrungsmittelbehälterdaten an die Steuerungseinrichtung 290 übergeben werden und dort weiterverarbeitet werden. Die Steuerungseinrichtung 290 weist eine Speichereinheit 292 auf, in der die Temperaturdaten und Nahrungsmittelbehälterdaten gespeichert werden.

Die Steuerungseinrichtung 290 ist mit den mehreren Heizelementen 285 elektrisch verbunden und steuert die jeweils notwendige Versorgungsleistung an den Heizelementen 285. Dafür weist die Steuerungseinrichtung 290 eine Recheneinheit 293 auf, welche mit der Speichereinheit 292 verbunden ist. Die Recheneinheit 293 ist dabei ausgebildet, die unterschiedlichen Nahrungsm ittelbehälterdaten und/oder Temperaturdaten und/oder Kochprozessdaten miteinander zu vergleichen bzw. mit dafür in der Speichereinheit 292 gespeicherten Sollwerten zu vergleichen, und auf Basis des Vergleichs die Versorgungsleistung und den Temperaturverlauf der einzelnen Heizelemente 285 der unterschiedlichen Kartuschenaufnahmen 280 zu steuern. Die modulare Kochkonsole 200 weist ein Displayeinrichtung 295 auf, welche mit der Steuerungseinrichtung 290 elektrisch verbunden ist und an welche die Nahrungsmittelbehälterdaten und/oder Temperaturdaten übermittelt werden. Die Displayeinrichtung 295 umfasst einen Touchscreen, mit welchem die modulare Kochkonsole vom Benutzer bedient wird. Beispielsweise kann der Benutzer Nahrungsmittelbehälterdaten und/oder Temperaturdaten am Touchscreen eingegeben.

Die Steuerungseinrichtung 290 weist eine Netzwerkschnittstelle 297 auf, mit der die Nahrungsmittelbehälterdaten und/oder Temperaturdaten und/oder Kochprozessdaten an eine Datenbank, die über das Internet zugänglich ist, übermittelt werden können. Die Nahrungsmittelbehälterdaten und/oder Temperaturdaten werden beispielsweise an eine Web-Plattform übermittelt, mit der sich verschiedene Benutzer von hier beschriebenen modularen Kochkonsolen 200 austauschen können.

Die modulare Kochkonsole 200 weist einen Flüssigkeitstank 275 auf, welcher mit dem Flüssigkeitsbehälter 270 verbunden ist und lösbar an der modularen Kochkonsole 200 angeordnet ist. Der Flüssigkeitsbehälter 270 weist eine Siphoneinrichtung 273 auf, welche den Flüssigkeitsbehälter 270 mit dem Flüssigkeitstank 275 verbindet und die Flüssigkeit 26 im Flüssigkeitsbehälter 270 auf einem konstanten Niveau hält.

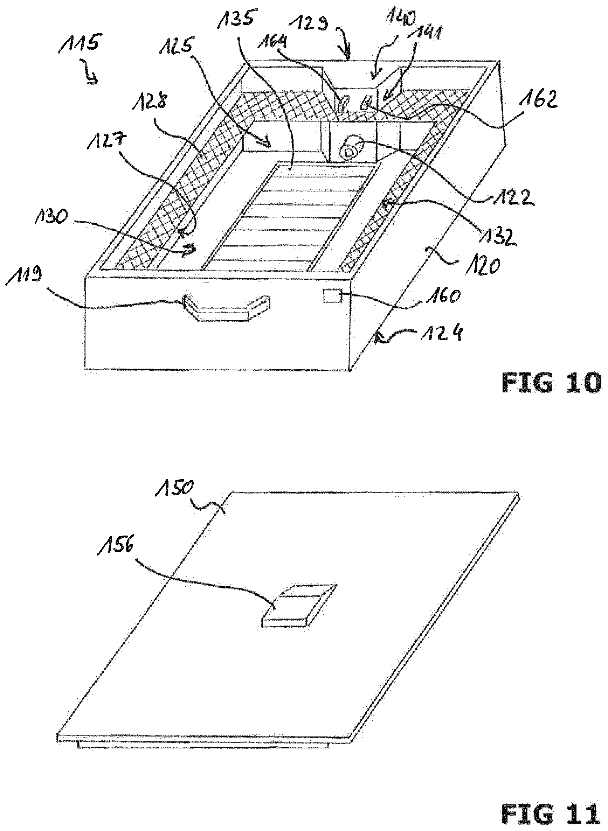

Die Fig. 10 und Fig. 11 zeigen eine weitere Ausführungsform einer Kartusche 115 zum Zubereiten von Nahrungsmitteln in einem Nahrungsmittelbehälter 10. Diese Kartusche 115 umfasst zum Teil dieselben Bauteile mit denselben technischen Merkmalen wie die Kartusche gemäss den Fig. 1 bis Fig. 6. Die Kartusche 115 ist schubladenförmig ausgebildet und weist einen Kartuschengrundkörper 120 mit einer Behälteraufnahme 130 und einem Kartuschengriff 119 sowie einen Kartuschendeckel 150 auf. Der Kartuschengrundkörper 120 weist eine Siebeinlage 128 und einen Kartuschenbodenabschnitt 125 auf, in dem eine Flüssigkeit 126, wie beispielsweise Wasser, einfüllbar ist. Im Kartuschenbodenabschnitt 125 befindet sich ein Dampferzeugungsabschnitt 127, in welchem aus der Flüssigkeit 126 Kochdampf erzeugt wird. Im Kartuschenboden 124 der Kartusche 115 ist ein Temperierelement 135 zum Erhitzen der Flüssigkeit 126 angeordnet. Das Temperierelement 135 besteht aus einem wärmeleitenden und magnetischen Material, in welchem die Wärme zum Erhitzen der Flüssigkeit 126 mithilfe eines externen Magnetfelds erzeugt wird.

Die Siebeinlage 128 trennt den Dampferzeugungsabschnitt 127 von der Behälteraufnahme 130. Die Siebeinlage 128 weist eine Halteeinheit 132 auf, welche den Nahrungsmittelbehälter 10 in der Behälteraufnahme 130 hält. Dabei liegt der Befestigungsabschnitt 13 des Nahrungsmittelbehälters 10 auf der Halteeinheit 132 auf, sodass verhindert werden kann, dass der Nahrungsmittelbehälter 10 am Kartuschengrundkörper 120 anliegt.

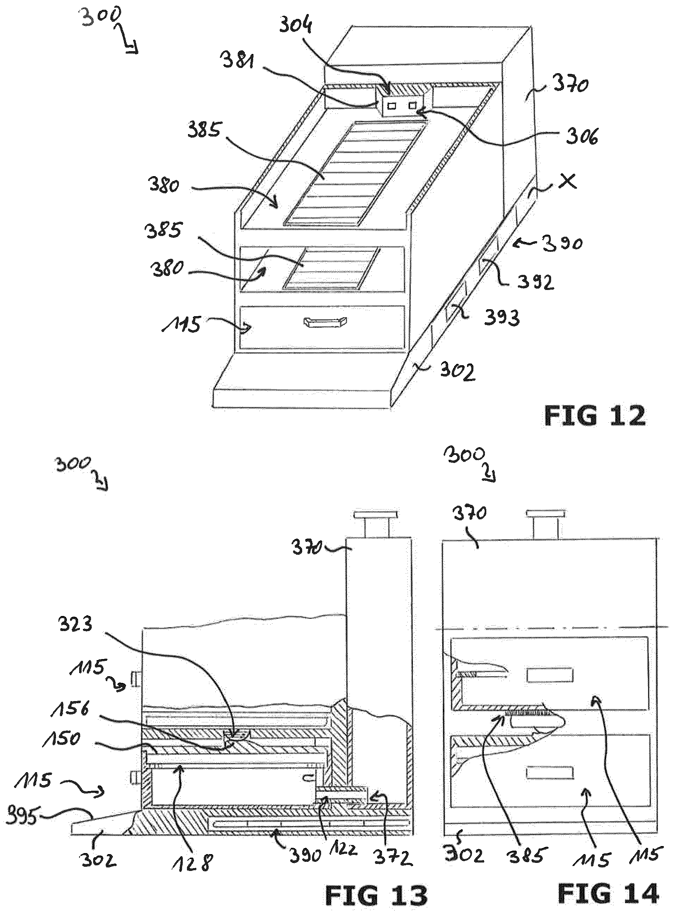

Im Bereich des Kartuschenbodenabschnitts 125 ist ein Anschlussabschnitt 140 angeordnet. Die Kartusche 115 wird im Bereich des Anschlussabschnitts 140 an die modulare Kochkonsole angeordnet. Der Anschlussabschnitt 140 weist eine Stecköffnung 141 auf, mit der die Kartusche 115 elektrisch und mechanisch mit einer modularen Kochkonsole (siehe Fig. 12) verbunden werden kann.

Der Kartuschengrundkörper 120 weist einen Anschluss 122 für eine Flüssigkeitsversorgung auf. Der Anschluss 122 ist mit dem Dampferzeugungsabschnitt 127 verbunden, sodass die Flüssigkeit 126 in den Dampferzeugungsabschnitt 127 geleitet wird. Am Kartuschengrundkörper 120 ist im Bereich der Behälteraufnahme 130 ein Temperaturfühler 162 zum Messen der Temperatur des Kochdampfs angeordnet, welcher elektrisch mit der Stecköffnung 141 am Anschlussabschnitt 140 verbunden ist.

Der Kartusche 115 weist eine Verriegelungseinrichtung 156 auf, mit welcher der vom Kartuschengrundkörper 120 separierbare Kartuschendeckel 150 dicht mit dem Kartuschengrundkörper 120 verschlossen wird. Die Verriegelungseinrichtung 156 weist ein erstes Verriegelungselement 157 und ein zweites Verriegelungselement 123 auf. Dabei ist das erste Verriegelungselement 157 am Kartuschendeckel 150 angeordnet und das zweite Verriegelungselement 323 an der modularen Kochkonsole angeordnet (siehe Fig. 13).

Am Kartuschengrundkörper 120 ist ein Überdruckventil 160 angeordnet, sodass der Kochdampf bei einem unerwünschten Überdruck aus der dicht verschlossenen Kartusche 115 entweichen kann.

Der Kartuschengrundkörper 120 weist eine Datenerkennungseinrichtung 164 auf, welche elektrisch mit der Stecköffnung 141 am Anschlussabschnitt 140 der Kartusche 115 verbunden ist. Die Datenerkennungseinrichtung 164 ist geeignet, diverse Nahrungsmittelbehälterdaten mithilfe von Radiowellen zu lesen und zu identifizieren. Dafür weist der Nahrungsmittelbehälter 10 einen RFID-Chip im Bereich des Befestigungsabschnitts 13 auf.

Die Fig. 12 bis Fig. 14 zeigen eine weitere Ausführungsform der erfindungsgemässen modularen Kochkonsole 300 für eine Kartusche 115 gemäss den Fig. 10 und Fig. 11. Die Fig. 13 und Fig. 14 sind zur besseren Sichtbarkeit einzelner Komponenten der modularen Kochkonsole 300 teilweise aufgeschnitten dargestellt. Diese modulare Kochkonsole 300 umfasst zum Teil dieselben Bauteile mit denselben technischen Merkmalen wie die modulare Kochkonsole gemäss den Fig. 7 bis Fig. 9. Die modulare Kochkonsole 300 umfasst eine Konsolenbasis 302 mit einer Displayeinrichtung 395 und mit mehreren Kartuschenaufnahmen 380 sowie einen Flüssigkeitsbehälter 370 zum Versorgen der Kartusche 115 mit einer Flüssigkeit 126, wie beispielsweise Wasser. Dafür weist der Flüssigkeitsbehälter 370 mehrere Öffnungen 372 auf, welche jeweils mit dem Anschluss 122 der Kartusche 115 verbunden wird.

Die Kartuschenaufnahmen 380 nehmen jeweils eine schubladenförmige Kartusche 115 auf und weisen jeweils einen Vorsprung 381 auf, welcher komplementär zu der Aussparung 129 der Kartusche 115 ausgebildet ist, wodurch der Vorsprung 381 so in die Aussparung 129 der Kartusche 115 passt, dass die Kartusche 115 fest jedoch lösbar mit der modularen Kochkonsole 300 verbunden ist. Der jeweilige Vorsprung 381 weist mehrere Steckverbindungen 306 auf, welche beim Anordnen der Kartusche 115 an die modulare Kochkonsole 300 in die Stecköffnungen 141 der Kartusche 115 eingeführt werden und mit dieser elektrisch verbunden werden. Weiters weist Kartuschenaufnahmen 380 einen Aufnahmeabschnitt 304 auf, an dem der Anschlussabschnitt 140 angeordnet wird.

Die modulare Kochkonsole 300 weist mehrere Heizelemente 385 zum Temperieren der Flüssigkeit 126 in der Kartusche 115 auf, welche jeweils in den jeweiligen Kartuschenaufnahmen 380 angeordnet sind. Als Heizelemente 385 sind Induktionsspulen vorgesehen, welche die Wärme in dem jeweiligen Temperierelement 135 am Kartuschenboden 124 der Kartusche 115 erzeugt. Dafür besteht das Temperierelement 135 zumindest abschnittsweise aus einem magnetischen Material.

Die modulare Kochkonsole 300 weist eine Steuerungseinrichtung 390 mit einer Recheneinheit 393 und ein Speichereinheit 392 auf, welche wie die zuvor beschriebene Steuereinrichtung 290 in der Kochkonsole 200 gemäss den Fig. 7 bis Fig. 9 ausgebildet ist und mit dem Temperaturfühler 161 und der Datenerkennungseinrichtung 164 der Kartusche 115 verbunden wird sowie die Heizleistung der Heizelemente 385 steuert.

Die modulare Kochkonsole 200 gemäss Fig. 7 bis Fig. 9 sowie die modulare Kochkonsole 300 gemäss Fig. 12 bis Fig. 14 weisen jeweils einen Verbindungsabschnitt X auf, womit die modularen Kochkonsolen mit weiteren wie hier beschriebenen modularen Kochkonsolen mechanisch und elektrisch verbunden werden können.

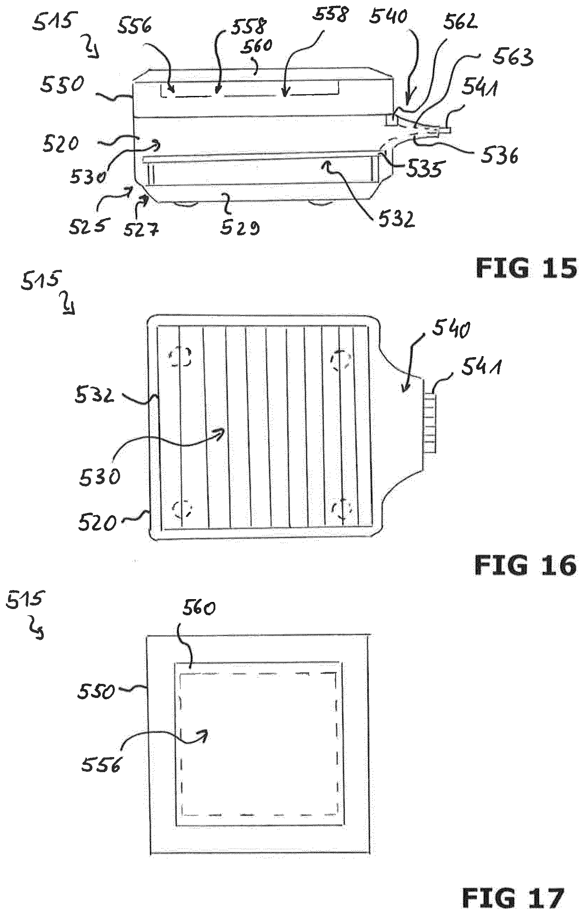

Die Fig. 15 bis Fig. 17 zeigen eine weitere Ausführungsform einer Kartusche als Grillkartusche 515 zum Zubereiten von Nahrungsmitteln. Die Grillkartusche 515 weist einen Grillkartuschengrundkörper 520 mit einer Nahrungsmittelaufnahme 530 zum Aufnehmen eines Nahrungsmittels auf sowie einen Grillkartuschendeckel 550 zum Verschliessen der Grillkartusche. Der Grillkartuschengrundkörper 520 weist einen Kartuschenbodenabschnitt 525 auf in dem ein Ölaufnahmeabschnitt 527 angeordnet ist. Im Ölaufnahmeabschnitt 527 ist eine Ölwanne 529 angeordnet, welche vom Ölaufnahmeabschnitt 527 lösbar und separierbar ist.

Der Grillkartuschengrundkörper 520 weist einen Anschlussabschnitt 540 auf. Die Grillkartusche 515 wird im Bereich des Anschlussabschnitts 540 an eine modulare Kochkonsole angeordnet. Der Anschlussabschnitt 540 weist eine Steckverbindung 541 auf, mit der die Grillkartusche 515 elektrisch und mechanisch mit einer modularen Kochkonsole verbunden wird.

Im Grillkartuschengrundkörper 520 ist ein Grillrost 532 angeordnet, welcher die Nahrungsmittelaufnahme 530 von dem Ölaufnahmeabschnitt 527 trennt. Der Grillrost 532 weist zumindest ein Temperierelement 535 zum Erhitzen des Nahrungsmittels auf, welches mithilfe eines Verbindungskabels 536 mit der Steckverbindung 541 elektrisch verbunden ist.

Im Grillkartuschengrundkörper 520 ist im Bereich der Nahrungsmittelaufnahme 530 ein Temperaturfühler 562 zum Messen der Temperatur in der Nahrungsmittelaufnahme 530 angeordnet, welcher mithilfe eines Verbindungskabels 563 elektrisch mit der Steckverbindung 541 am Anschlussabschnitt 540 verbunden ist.

Der Grillkartuschendeckel 550 umfasst ein Ölreservoir 556 zum Aufnehmen von Kochöl oder Kochfett. Das Ölreservoir 556 weist mehrere Öffnungen 558 zum dosierten Abgeben von Kochöl oder Kochfett an den Kartuschengrundkörper 520 auf. Am Grillkartuschendeckel 550 ist eine Filtereinrichtung 560 zum Aufnehmen des Grilldampfs angeordnet. Die Filtereinrichtung 560 ist als Dunstabsaugeinrichtung zum Absaugen des Grilldampfs ausgebildet und lösbar und separierbar im Grillkartuschendeckel 550 angeordnet.

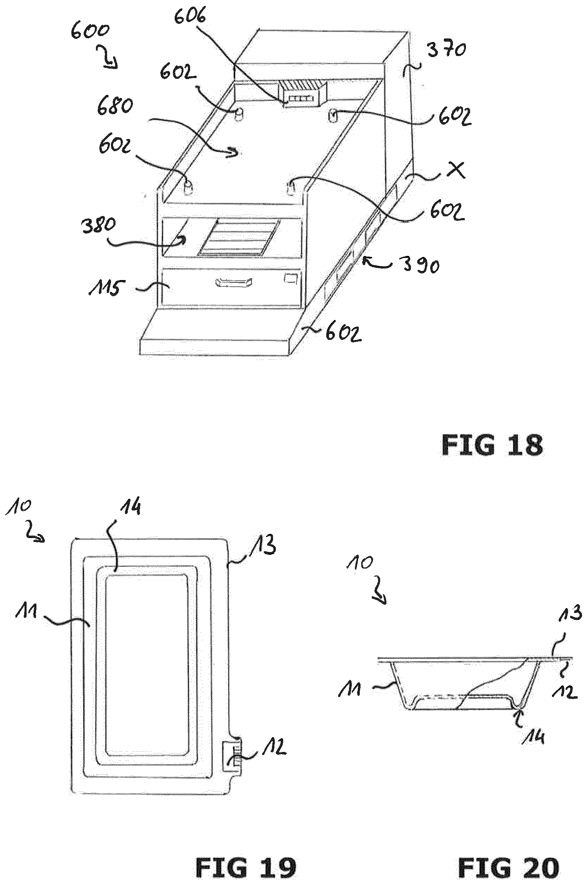

Die Fig. 18 zeigt eine weitere Ausführungsform der erfindungsgemässen modularen Kochkonsole 600 für eine Kartusche 115 gemäss den Fig. 10 und Fig. 11 sowie für eine Grillkartusche 515 gemäss den Fig. 15 bis Fig. 17. Diese modulare Kochkonsole 600 umfasst weitgehend dieselben Bauteile mit denselben technischen Merkmalen wie die modulare Kochkonsole 300 gemäss den Fig. 12 bis Fig. 14.

Zusätzlich weist die modulare Kochkonsole 600 eine Grillkartuschenaufnahme 680 auf, wobei sich die Grillkartuschenaufnahme 680 von der Kartuschenaufnahme 380 unterscheidet. Die Grillkartuschenaufnahme 680 weist mehrere Sockelelemente 602 und eine Steckeröffnung 608 auf und ist zur Kartuschenaufnahme 380 benachbart.

Die Grillkartusche 515 gemäss den Fig. 15 bis Fig. 17 wird auf die Sockelelemente 602 angeordnet und gehalten, wobei die Grillkartusche 515 von den Kartuschen 115 beabstandet wird. Beim Anordnen der Grillkartusche 515 an die modulare Kochkonsole 600 wird die Steckverbindung 541 der Grillkartusche 515 mit der Steckeröffnung 606 der modularen Kochkonsole 600 elektrisch verbunden. Damit ist der Temperaturfühler 562 sowie das Temperierelement 535 mit der Steuerungseinrichtung 390, wie zuvor beschrieben, elektrisch verbunden.

Die Fig. 19 und Fig. 20 zeigen den erfindungsgemässen Nahrungsmittelbehälter 10 für die vorliegend beschriebenen Kartuschen. Der Nahrungsmittelbehälter 10 weist einen Behälterkörper 11 zum Aufnehmen von Nahrungsmitteln und einen Befestigungsabschnitt 13 zum Befestigen des Nahrungsmittelbehälters 10 in der Kartusche 15 bzw. 115 auf. An der dem Befestigungsabschnitt 13 gegenüberliegenden Seite des Nahrungsmittelbehälter 10 ist eine Sicke 14 geformt, wodurch sich das Volumen des Nahrungsmittelbehälters 10 während des Dampfkochverfahrens vergrössern werden kann, ohne dass der Nahrungsmittelbehälter 10 beschädigt wird. Im Bereich des Befestigungsabschnittes 13 ist eine Datenspeichereinheit 12 angeordnet, auf dem die hier vorliegend beschriebenen Nahrungsmittelbehälterdaten gespeichert sind.

In weiterer Folge wird ein typisches Verfahren zum Zubereiten von Nahrungsmitteln in zumindest einer der hier beschriebenen Kartuschen beschrieben und einer hier beschriebenen modularen Kochkonsole offenbart. Die jeweilige modulare Kochkonsole weist eine wie hier beschriebene Steuerungseinrichtung auf.

Das Verfahren wird in Bezugnahme auf die Ausführungsform der Kartusche gemäss Fig. 1 bis Fig. 6 und der modularen Kochkonsole gemäss Fig. 7 bis Fig. 10 beschrieben. Dieses Verfahren ist jedoch ebenfalls auf die weiteren hier beschriebenen Kartuschen bzw. die weiteren hier beschriebenen modularen Kochkonsolen anwendbar.

In einem ersten Schritt erfolgt das Bereitstellen eines Nahrungsmittelbehälters 10 in der zumindest einen Kartusche 15. Anschliessend werden die Nahrungsmittelbehälterdaten von der Datenerkennungseinrichtung 64 ermittelt und diese an die Steuerungseinrichtung 290 übermittelt.

Die Steuerungseinrichtung 290 übermittelt die Nahrungsmittelbehälterdaten an die Recheneinheit 293, welche diese weiterverarbeitet. Dabei vergleicht die Recheneinheit 293 die Nahrungsmittelbehälterdaten mit entsprechenden Solldaten des jeweils zuzubereitenden Nahrungsmittels, welche in der Speichereinheit 292 der Steuerungseinrichtung 290 gespeichert sind.

In weiterer Folge erzeugt die Steuerungseinrichtung 290 einen Steuerbefehl, welcher die Temperierelemente 35 der zumindest einen Kartusche 15 auf Basis des übermittelten Nahrungsmittelbehälterdaten temperiert. Dabei erhitzt das Temperierelement 35 die Flüssigkeit 26 im Dampferzeugungsabschnitt 27 der Kartusche 15, sodass in der Behälteraufnahme 30 Kochdampf entsteht.

Die Temperatur des Kochdampfs wird anschliessend mit dem Temperaturfühler 62 gemessen und als Temperaturdaten an die Steuerungseinrichtung 290 der modularen Kochkonsole 200 übermittelt. Die Temperaturdaten werden in weiterer Folge an die Recheneinheit 293 übermittelt und dort weiterverarbeitet. Dabei werden die Temperaturdaten mit entsprechenden Solldaten aus der Speichereinheit 292 verglichen und Steuerbefehle für die Temperierelemente 35 erzeugt, sodass die Temperierelemente 35 auf Basis des übermittelten Temperaturdaten temperiert bzw. geregelt werden und somit die Temperatur des Kochdampfs geregelt werden kann.

Die Nahrungsmittelbehälterdaten und/oder Temperaturdaten werden mithilfe der Netzwerkschnittstelle 297 der modularen Kochkonsole 200 auf einer Web-Plattform zur Verfügung gestellt und/oder können von der Web-Plattform auf die Netzwerkschnittstelle 297 übermittelt werden sowie in der Speichereinheit 292 als neue Solldaten gespeichert werden.

**Bezugszeichenliste**

| | | | |
|---|---|---|---|
| 10 | Nahrungsmittelbehälter | 115 | Kartusche |
| 11 | Behälterkörper | 119 | Kartuschengriff |
| 12 | Datenspeichereinheit | 120 | Kartuschengrundkörper |
| 13 | Befestigungsabschnitt | 122 | Anschluss |
| 14 | Sicke | 123 | zweiten Verriegelungselement |
| 15 | Kartusche | 124 | Kartuschenboden |
| 20 | Kartuschengrundkörper | 125 | Kartuschenbodenabschnitt |
| 22 | Anschluss | 126 | Flüssigkeit |
| 23 | zweiten Verriegelungselement | 127 | Dampferzeugungsabschnitt |
| 24 | Kartuschenboden | 128 | Siebeinlage |
| 25 | Kartuschenbodenabschnitt | 129 | Aussparung |
| 26 | Flüssigkeit | 130 | Behälteraufnahme |
| 27 | Dampferzeugungsabschnitt | 132 | Halteinheit |
| 28 | Siebeinlage | 135 | Temperierelement |
| 29 | Aussparung | 140 | Anschlussabschnitt |
| 30 | Behälteraufnahme | 141 | Stecköffnung |
| 32 | Halteinheit | 150 | Kartuschendeckel |
| 33 | Halteöffnung | 156 | Verriegelungseinrichtung |
| 35 | Temperierelement | 157 | ersten Verriegelungselement |
| 40 | Anschlussabschnitt | 160 | Überdruckventil |
| 41 | Stecköffnung | 162 | Temperaturfühler |
| 50 | Kartuschendeckel | 164 | Datenerkennungseinrichtung |
| 51 | ersten Verriegelungselement | | |
| 52 | Halteeinheit | 200 | modularen Kochkonsole |
| 53 | Halteklammer | 202 | Konsolenbasis |
| 56 | Verriegelungseinrichtung | 204 | Aufnahmeabschnitt |
| 57 | erstes Verriegelungselement | 206 | Steckverbindungen |
| 58 | Datensteckverbindung | 270 | Flüssigkeitsbehälter |
| 59 | Datenübertragungskabel | 272 | Öffnungen |
| 60 | Überdruckventil | 273 | Siphoneinrichtung |
| 62 | Temperaturfühler | 275 | Flüssigkeitstank |
| 63 | Verbindungskabel | 280 | Kartuschenaufnahmen |
| 64 | Datenerkennungseinrichtung | 281 | Vorsprung |
| | | 285 | Heizelement |
| 290 | Steuerungseinrichtung | 525 | Kartuschenbodenabschnitt |
| 292 | Speichereinheit | 527 | Ölaufnahmeabschnitt |
| 293 | Recheneinheit | 529 | Ölwanne |
| 295 | Displayeinrichtung | 530 | Nahrungsmittelaufnahme |
| 297 | Netzwerkschnittstelle | 532 | Grillrost |
| | | 535 | Temperierelement |
| 300 | modularen Kochkonsole | 536 | Verbindungskabels |
| 302 | Konsolenbasis | 540 | Anschlussabschnitt |
| 304 | Aufnahmeabschnitt | 541 | Steckverbindung |
| 306 | Steckverbindungen | 550 | Grillkartuschendeckel |
| 323 | zweiter Verriegelungselement | 556 | Ölreservoir |
| 370 | Flüssigkeitsbehälter | 558 | Öffnungen |
| 372 | Öffnungen | 560 | Filtereinrichtung |
| 380 | Kartuschenaufnahmen | 562 | Temperaturfühler |
| 381 | Vorsprung | 563 | Verbindungskabel |
| 385 | Heizelement | | |
| 390 | Steuerungseinrichtung | 600 | modularen Kochkonsole |
| 392 | Speichereinheit | 602 | Sockelelemente |
| 393 | Recheneinheit | 606 | Steckeröffnung |
| 395 | Displayeinrichtung | 680 | Grillkartuschenaufnahme |
| | | | |
| 515 | Grillkartusche | X | Verbindungsabschnitt |
| 520 | Grillkartuschengrundkörper | | |

## Patentansprüche

1. Kartusche (15; 115) für eine modulare Kochkonsole (200; 300; 600) zum Zubereiten von einem Nahrungsmittel in einem Nahrungsmittelbehälter (10), insbesondere in einem Nahrungsmittelbehälter mit einer vorportionierten Nahrungsmittelmenge, umfassend einen Kartuschengrundkörper (20; 120) mit einem Kartuschenbodenabschnitt (25; 125) und mit einer Behälteraufnahme (30; 130) zum Aufnehmen des Nahrungsmittelbehälters (10), ein erstes Temperierelement (35; 135) sowie einen Anschlussabschnitt (40; 140) zum Anschliessen der Kartusche (15; 115) an die modulare Kochkonsole (200; 300) **dadurch gekennzeichnet, dass** die Kartusche (15; 115) einen Dampferzeugungsabschnitt (27; 127) zum Erzeugen von Kochdampf aufweist, wobei bevorzugt der Dampferzeugungsabschnitt (27; 127) von der Behälteraufnahme (30; 130) beabstandet ist.

2. Kartusche (15; 115) nach Anspruch 1, **dadurch gekennzeichnet, dass** der Dampferzeugungsabschnitt (27; 127) im Kartuschenbodenabschnitt (25; 125) angeordnet ist und/oder die Kartusche (15; 115) eine Siebeinlage (28; 128) aufweist, welche den Dampferzeugungsabschnitt (27; 127) von der Behälteraufnahme (30; 130) trennt.

3. Kartusche nach Anspruch 1 oder 2, **dadurch gekennzeichnet, dass** die Behälteraufnahme (30; 130) eine Halteeinheit (32; 132) zum Halten des Nahrungsmittelbehälters (10) aufweist, wobei die Halteeinheit (32; 132) bevorzugt an der Siebeinlage (28; 128) angeordnet ist und wobei die Halteeinheit (32; 132) insbesondere eine Halteöffnung (33) aufweist.

4. Kartusche (15; 115) nach einem der vorhergehenden Ansprüche, **dadurch gekennzeichnet, dass** der Kartuschenbodenabschnitt (25; 125) eine Aussparung (29; 129) zum Anordnen der Kartusche (15; 115) an der modularen Kochkonsole (200; 300) aufweist und/oder der Kartuschengrundkörper (20; 120) eine Aussparung (29; 129) zum Anordnen der Kartusche (15; 115) an der modularen Kochkonsole (200; 300; 600) aufweist.

5. Kartusche (15; 115) nach einem der vorhergehenden Ansprüche, **dadurch gekennzeichnet, dass** die Kartusche (15; 115) einen Anschluss (22; 122) für eine Flüssigkeitsversorgung aufweist, wobei der Anschluss (22; 122) mit dem Dampferzeugungsabschnitt (27; 127) zum Auffüllen des Dampferzeugungsabschnitts (27; 127) mit Flüssigkeit verbunden ist.

6. Kartusche (15; 115) nach einem der vorhergehenden Ansprüche, **dadurch gekennzeichnet, dass** der Kartuschengrundkörper (20; 120) im Wesentlichen aus einem wärmeisolierenden Material besteht und abschnittsweise aus einem wärmeleitenden Material besteht, wobei das wärmeleitende Material insbesondere an dem Kartuschenbodenabschnitt (25; 125) angeordnet ist und bevorzugt das erste Temperierelement (35; 135) im Kartuschenbodenabschnitt (25; 125) angeordnet ist.

7. Kartusche (15; 115) nach einem der vorhergehenden Ansprüche, **dadurch gekennzeichnet, dass** die Kartusche (15; 115) einen Kartuschendeckel (50; 150) aufweist, wobei der Kartuschendeckel (50; 150) bevorzugt eine weitere Halteeinheit (52) zum Halten des Nahrungsmittelbehälters aufweist, welche insbesondere eine Halteklammer (53) ist.

8. Kartusche (15; 115) nach einem der vorhergehenden Ansprüche, **dadurch gekennzeichnet, dass** die Kartusche (15; 115) ein Überdruckventil (60; 160) aufweist und bevorzugt einen Temperaturfühler (62; 162) aufweist und insbesondere eine Datenerkennungseinrichtung (64; 164) zum Erfassen von Nahrungsmittelbehälterdaten aufweist.

9. Modulare Kochkonsole (200; 300; 600) für zumindest eine Kartusche, insbesondere für eine Kartusche (15; 115) nach einem der vorhergehenden Ansprüche, **umfassend** einen Flüssigkeitsbehälter (270; 370) zum Versorgen der zumindest einen Kartusche (15; 115) mit einer Flüssigkeit und zumindest eine Kartuschenaufnahme (280; 380) zum Anordnen der zumindest einen Kartusche (15; 115) an der modularen Kochkonsole (200; 300), wobei diese Kartuschenaufnahme (280; 380) zumindest einen Vorsprung (281; 381) zum Positionieren der zumindest einen Kartusche (15; 115) aufweist und der zumindest eine Vorsprung (281; 381) insbesondere zu zumindest einer Aussparung (29; 129) der zumindest einen Kartusche (15; 115) komplementär ausgebildet ist.

10. Modulare Kochkonsole (200; 300; 600) nach Anspruch 9, **dadurch gekennzeichnet, dass** die modulare Kochkonsole (200; 300; 600) eine weitere Kartuschenaufnahme (280; 380) zum Aufnehmen einer weiteren Kartusche aufweist, insbesondere einer Kartusche (15; 115) nach einem der Ansprüche 1 bis 8.

11. Modulare Kochkonsole (200; 300; 600) nach Anspruch 9 oder 10, **dadurch gekennzeichnet, dass** die modulare Kochkonsole (200; 300; 600) zumindest ein Heizelement (285; 385) zum Temperieren der Flüssigkeit in der zumindest einen Kartusche (15; 115) aufweist, wobei das zumindest eine Heizelement (285; 385) im Wesentlichen an der zumindest einen Kartuschenaufnahme (280; 380) angeordnet ist und insbesondere eine Induktionsspule ist.

12. Modulare Kochkonsole (200; 300; 600) nach einem der Ansprüche 9 bis 11, **dadurch gekennzeichnet, dass** die modulare Kochkonsole (200; 300) eine Steuerungseinrichtung (290; 390) aufweist, welche zumindest mit einer Datenerkennungseinrichtung (64; 164) der zumindest einen Kartusche (15; 115) und/oder mit zumindest einem Temperaturfühler (62; 162) der zumindest einen Kartusche (15; 115) verbunden ist.

13. Modulare Kochkonsole (200; 300) nach einem der Ansprüche 9 bis 12, **dadurch gekennzeichnet, dass** die modulare Kochkonsole (200; 300; 600) zumindest eine Grillkartuschenaufnahme (680) aufweist, wobei sich die Grillkartuschenaufnahme (680) von der Kartuschenaufnahme (280; 380) unterscheidet.

14. Nahrungsmittelbehälter (10) für eine Kartusche (15; 115) nach einem der Ansprüche 1 bis 8, **wobei** der Nahrungsmittelbehälter (10) einen Behälterkörper (11) zum Aufnehmen von Nahrungsmittel aufweist und zumindest einen Befestigungsabschnitt (13) zum Befestigen des Nahrungsmittelbehälters (10) in der Kartusche (15; 115) aufweist, wobei der Nahrungsmittelbehälter (10) bevorzugt eine Sicke (14) aufweist und/oder eine Datenspeichereinheit (12) aufweist.

15. Verfahren zum Zubereiten von einem Nahrungsmittel in zumindest einer Kartusche, insbesondere in einer Kartusche (15; 115) nach einem der Ansprüche 1 bis 8, mit einer modularen Kochkonsole, insbesondere mit einer modularen Kochkonsole (200; 300) nach einem der Ansprüche 9 bis 13, welche eine Steuerungseinrichtung (290; 390) aufweist, **wobei** das Verfahren folgende Schritte umfasst:
- Bereitstellen eines Nahrungsmittelbehälters (10) in der zumindest einen Kartusche (15; 115);
- Übermitteln von Nahrungsmittelbehälterdaten und/oder Temperaturdaten an die Steuerungseinrichtung (290; 390) der modularen Kochkonsole (200; 300);
- Temperieren zumindest eines ersten Temperierelements (35; 135) der zumindest einen Kartusche (15; 115) auf Basis der übermittelten Nahrungsmittelbehälterdaten und/oder Temperaturdaten.
